# EUROPEAN PATENT SPECIFICATION

(11) **EP 1 033 848 B1**
(45) Date of publication and mention of the grant of the patent: **03.12.2008**
(21) Application number: 99301429.9
(22) Date of filing: 26.02.1999
(51) Int. Cl.: H04L 12/56

(54) **Proxy server supporting IP quality of service**
Proxy-server für Unterstützung von IP Dienstleistungsqualität
Serveur Proxy supportant qualité de service pour IP

(43) Date of publication of application: 06.09.2000
(73) Proprietor: Lucent Technologies Inc., Murray Hill NJ 07974-0636 (US)
(72) Inventor: Chen, Xiaobao, Swindon, Wiltshire SN5 7EP (GB)
(74) Representative: Williams, David John

(56) References cited:
- EP-A- 0 790 751
- WO-A-99/21327
- US-A- 5 764 645

## Description

### Field of the Invention

The present invention relates to the support of quality of service (QoS) requirements in Internet protocol (IP) packet routing.

### Background to the Invention

Current internet protocol (IP) technology enables a level of quality of service to be maintained in the transmission of IP packets between host terminals in different networks. Typically, the quality of service is maintained by the routing switches extracting flow identification information from IP packets. The quality of service (QoS) provisions proposed to be used in the Internet are defined by standards, and in IP one known standard for quality of service signaling is called RSVP. RSVP (Resource Reservation Protocol) is used in the Integrated Services Model (IntServ) quality of service framework defined by IETF. The Integrated Services Model was designed to provide special handling for certain types of traffic, provide mechanisms for applications to choose between multiple levels of delivery services for its traffic, and to provide signaling for quality of service parameters at Layer 3 in the OSI RM.

IntServ defines two classes of services. The Controlled Load Class provides traffic delivery in the same way as when the network is unloaded ("better than best delivery"). The Guaranteed QoS Service Class delivers traffic for applications with a bandwidth guarantee and delay bound.

IntServ requires QoS capable nodes and a signaling protocol to communicate QoS requirements between applications and nodes and between nodes.

RSVP is the QoS signaling protocol used by IntServ. RSVP provides receivers QoS requests to all router nodes along the transit path of the traffic, maintains the soft-state (Path/Reservation states), and results in resources being reserved in each router.

For RSVP/IntServ quality of service to operate, the flow identification information must be in a fixed location in the IP packet. An RSVP session is configured by the host terminals exchanging so-called Path and Reservation messages prior to data transmission.

To enable the quality of service control across the transit path between peer host terminals, each host terminal must therefore have the functionality to configure the necessary messages and recognise quality of service requests corresponding to an RSVP session.

One problem with existing RSVP implementations is that they are platform and application dependent. Terminals include system specific RSVP daemons and/or RSVP API embedded in the applications. The platform and application dependency of existing RSVP implementations leads to a limited use of RSVP in some operating systems and those applications which are RSVP incapable..

It is therefore an object of the present invention to provide a technique whereby the requirement to set up a particular quality of service session between host terminals in different networks can be simply and widely provided.

It is known from European patent application publication EP-A-0790 751 to provide a method of configuring a quality of service session between terminals in different networks capable of supporting IP communication.

### Summary of the Invention

The present invention is characterised over the disclosure of EP-A-0790 751 in that the method comprising: providing means, in at least one of the networks, linked to at least one terminal in that network, the means being operative to configure a quality of service session between that one terminal and a terminal in another network.

According to the present invention there is provided a method of configuring a quality of service session between terminals in different networks capable of supporting IP communication, the method comprising: providing means, in at least one of the networks, associated with at least one terminal in that network and for configuring a quality of service session between that one terminal and a terminal in another network.

The present invention is generally applicable to any quality of service session which utilises request and reply messages between two terminals for configuring a quality of service session.

There is thus provided a technique for configuring a quality of service session which is both platform and application independent. By providing a dedicated means for establishing quality of service sessions, then current and future quality of service signaling incapable host terminals can have a quality of service session set-up and thus their quality of service control enabled across the transmit path to their communication peers.

The requirements for complicated and intensive computing as induced in many quality of service control signaling and control mechanisms, and strain on battery power for wireless/mobile terminals, are avoided. The quality of service session may be configured responsive to a quality of service request from the at least one terminal. The quality of service request may be indicative of the quality of service to be supported. The quality of service request may specify exactly the quality of service to be supported. The quality of service request may indicate the nature of the data to be transmitted once the quality of service session is established. The quality of service session may be an RSVP session and a Path message is generated by the means responsive to the quality of service request. The at least one terminal may receive a confirmation signal from the means indicating that the quality of service session has been configured. The quality of service session may be an RSVP session and the means generates the confirmation signal responsive to a Reservation message.

A quality of service indication signal may be generated to the at least one terminal responsive to initiation of a quality of service session. The means may complete configuration of the quality of service session responsive to a quality of service response signal from the at least one terminal. The quality of service session may be an RSVP session and the initiation of the quality of service session is indicated by a Path message, and the configuration of the quality of service session is completed by receipt of a Reservation message.

The present invention also provides a network having at least one terminal capable of supporting IP communication a means associated with the at least one terminal, for configuring a quality of service session between the at least one terminal and a terminal in another network.

The means is preferably a proxy server.

### Brief Description of the Figures

Figure 1 illustrates an example network set-up in which each network is provided with a proxy server in accordance with the invention;
Figure 2 shows a flow diagram illustrating the main steps for setting up a quality of service session in the network of Figure 1;
Figure 3 illustrates the message packet format according to the internet protocol (IP); and
Figures 4(a) and 4(b) represent the general format of Path and Reservation messages for configuring an RSVP quality of service session.

### Description of Preferred Embodiment

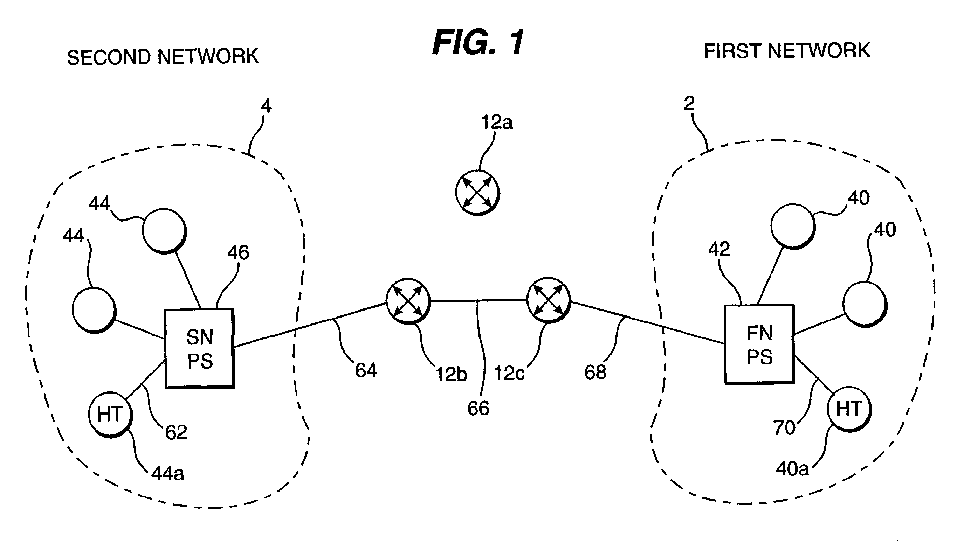

Referring to Figure 1 there is shown a typical network set-up in which means for supporting quality-of-service (QoS) between host terminals is supported in accordance with the present invention.

A first network 2 includes a plurality of host terminals 40 all connected to a first network proxy server FN PS 42. A second network 4 also includes a plurality of host terminals 44 connected to a second network proxy server SN PS 46. Communication between host terminals in the respective networks is made by establishing interconnection via a plurality of routing switches 12. A particular second network host terminal 44a is connected to the second network proxy server 46 via a network link 62. A particular host terminal 40a in the first network is connected to the first network proxy server 42 via a network link 70. The second network proxy server 46 connects to one of the plurality of routing switches 12b via network link 64. The first network proxy server connects to one of the routing switches 12c via network link 68. The two routing switches are connected via network link 66.

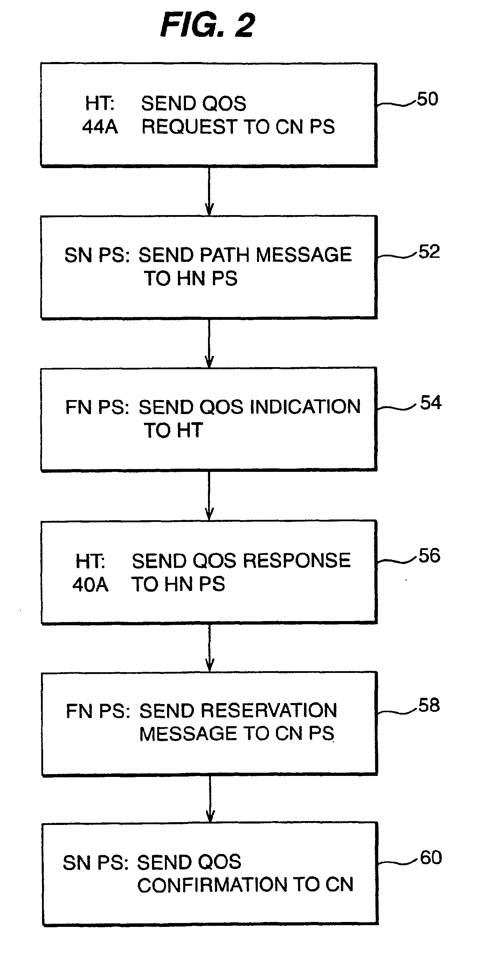

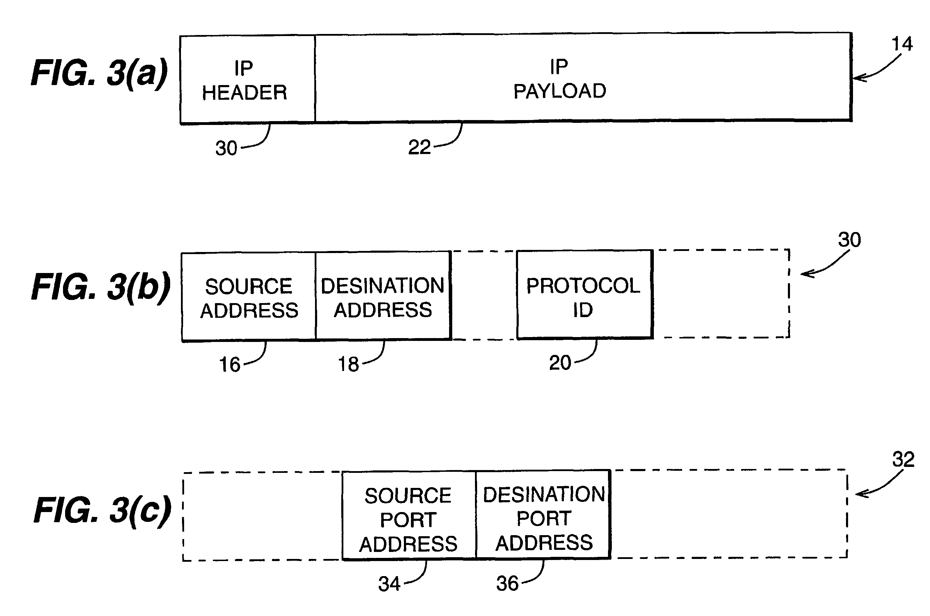

In network systems which require a specific quality of service a quality of service session must be configured between the host terminals at each end of the communication link before the transmission of IP packets takes place. The general format of IP data packets is shown in Figures 3(a) to 3(c). An IP data packet transmitted between networks, generally designated by reference numeral 14 and illustrated in Figure 3(a), comprises an IP header 30, and an IP payload 22. The IP payload 22 is the information portion of the message. The IP header 30, shown in Figure 2(b), includes a source address portion 16, a destination address portion 18, and a protocol ID portion 20. The IP header 30 contains other fields which are not shown in Figure 3(b). Referring to Figure 3(c), the IP payload 32 includes a source port number 34 and a destination port number 36. Again, the IP payload includes other fields.

The source address 16 is the IP address of the host terminal from which the IP data packet is sent (i.e. the second network host terminal 44a), and the destination address 18 is the address of the host terminal to which the IP data packet is to be sent. The source port number 34 is the port number used by an application at the source host terminal associated with the IP data packet 14. The destination port number is the port number used by an application of the destination host terminal to which the IP data packet 14 is being sent.

In addition to other uses, the protocol ID 20 is one of the indications of the quality of service to be supported in transmitting the IP packet from the source applications to the destination applications. As will be appreciated by one familiar with the art, and discussed further hereinafter, the destination and source addresses are used by routing switches to route the IP data packet to its destination.

When the the routers or routing switches support quality of service (QoS), in some QoS control provisions, such as RSVP and IntServ, the protocol ID 20 is used together with the source and destination addresses 16 and 18, plus the communication port numbers of end applications (i.e. the source port number 34 and the destination port number 36) for differentiating flows and imposing the necessary QoS control.

The QoS control imposed on the data traffic flows at the intermediate routers is system dependent. For example, it can be the so-called WFQ (Weighted Fair Queuing) or CBQ (Class Based Queuing). They are not standard and vendor specific but usually independent of the actual user's protocol ID.

The IETF's IntSer/RSVP standard is defined to provide a QoS specification and a signaling mechanism but not a QoS control mechanism. Intserve/RSVP is independent of the actual QoS control mechanisms, such as WFQ, CBQ etc.

The status based on which QoS control is performed is set up in the routing switches prior to data transmission by means of the specific quality of service signaling protocol, e.g. RSVP.

The technique for establishing a quality of service session, and particularly an RSVP session, between two host terminals according to the present invention will now be described with the aid of the flow diagram of Figure 2. In the following example, it is assumed that the second network host terminal 44a initiates a communication with the host terminal 40a. In this example implementation of the invention, in a step 50 the second network host terminal 44a initiating a quality of service session sends a quality of service request on network link 62 to the second network proxy server 46.

The quality of service request may be implicit or explicit. An explicit quality of service request from the host terminal specifies an exact quality of service requirement. Thus an explicit quality of service request can be provided only by a host terminal which has the functionality to support the explicit statement of a particular quality of service. An implicit quality of service request from the host terminal specifies only the nature of the transmission to be made. For example, an implicit quality of service request may indicate that the data to be sent is video data encoded using certain video codec. The proxy server then determines the appropriate quality of service in dependence on the indication of the type of data.

Responsive to the quality of service request, the second network proxy server, in a step 52, then sends a standard RSVP Path message. The Path message is communicated to the first network proxy server 18 associated with the host terminal with which the second network host terminal wants to communicate via the routing switches 12b and 12c.

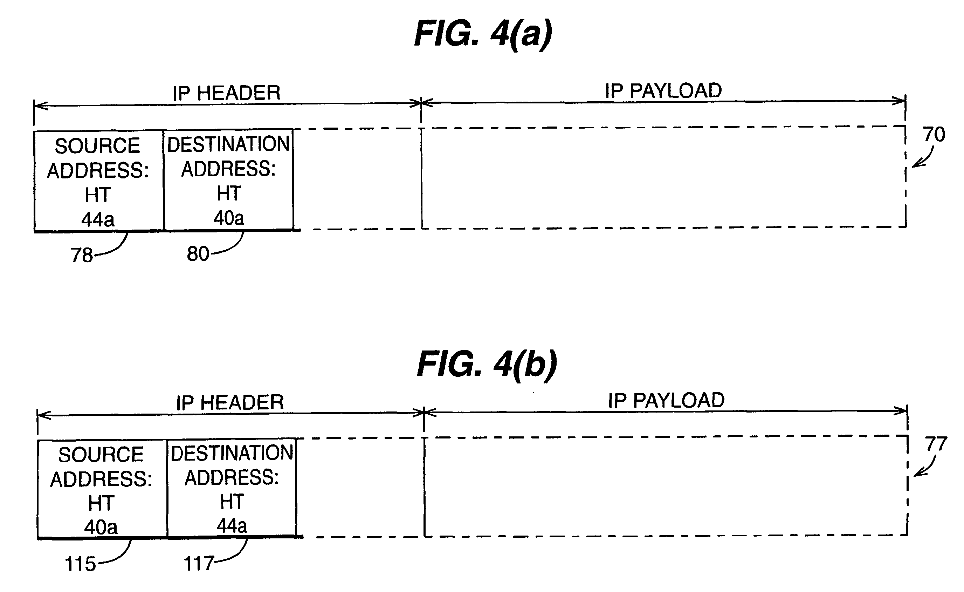

The IP packets of the messages used in an RSVP session do not have the format shown in Figures 3(a) to 3(c). The IP packets of Figures 3(a) to 3(c) are IP packets of data messages. The IP packets 70 of the Path message, as shown in Figure 4(a) have a source address 78 corresponding to the address of the second network host terminal 44a, and a destination address 80 corresponding to the address of the host terminal 40a in the first network (the host terminals home address).

The IP packets of the Path message (and other RSVP messages) additionally include other flow identification information in the payload of the IP packets. One skilled in the art will be familiar with the other flow identification information.

Turning again to the flow chart of Figure 2, the Path message is sent out by the second network proxy server. In the illustrative example of Figure 1, the IP packets of the Path message are routed, in a conventional manner (based on the source and destination addresses) to the routing switch 12b.

If the routing switches 12b,12c support quality of service, then they extract the flow identification information in the IP payload of the Path message IP packets, and store this flow identification information. This flow identification information includes: the source address, the destination address, the source port number, the destination port number, and the protocol ID which will be included in all IP data packets transmitted from the source to the destination after the quality of service session has been set up. The routing switches 12b,12c route the IP packets of the Path message to another routing switch, and then additionally stores with the flow identification information extracted from the IP packet, the address of the routing switch to which it sent the message (the next hop) and the address of the routing switch from which it received the message (the previous hop).

Although in Figure 1 it is illustrated that the IP packets reach the first network 2 via two routing switches 12b,12c, in practice the IP packets may reach the first network via a larger plurality of routing switches, and each routing switch stores the flow identification information extracted from the IP packets of the Path message, together with the identity of the routing switch from which the IP packet was sent and the routing switch to which the IP packet was sent.

Thus the IP packets of the Path message travel from the second network host terminal to the first network through the routing network. Each routing switch retains the address of the previous hop from which the IP packet was sent together with the next hop to which the IP packet was sent, and additionally the flow identification information for the IP packet. The routing switches also process the other traffic related information in the Path message, the nature of which is not relevant to a discussion of the present invention.

After the quality of service session has been set up, when another IP packet arrives at a particular routing switch having the same flow identification information that has been stored in the routing switch memory, the routing switch forwards it to the exact same next hop, the address of which is stored in memory. The flow identification information for data packets is retrieved from the fields of the IP data packets shown in Figures 3(a) to 3(c). Thus at successive hops, each routing switch (provided it supports RSVP quality of service) retrieves the flow identification information from the fixed locations of the IP packets of the Path message and stores them in memory, together with the addresses of the next and previous hops. Thus the flow identification information in the IP packets helps to uniquely identify a message flow, so that all IP packets associated with that message flow can be routed from the source to the destination through the exact same network path.

The first network proxy server 42 receives the Path message, and in a step 54, sends a quality of service indication signal to the host terminal 40a on line 70, indicating the quality of service requested by the second network host terminal 44a. If the quality of service level is acceptable to the host terminal 40a, the host terminal sends a quality of service response by way of acknowledgement to the first network proxy server 42 in a step 56 on line 70.

In a step 58 the first network proxy server than sends a Reservation message to the second network proxy server 20, confirming the quality of service session. The Reservation message follows the identical route to the Path message (in reverse).

The general format of the Reservation message 77 sent back by the first network proxy server is illustrated in Figure 4(b). As can be seen, the source address 115 is the host terminal's 40a address, and the destination address 117 is the second network host terminal's 44a address and the correct correlation exists between the source and destination addresses of the Path and Reservation messages in the RSVP session, such that the RSVP session is supported.

It will be understood by one skilled in the art that the IP packets of a Reservation message (Resv) are transmitted hop-by-hop back along the identical network path as the IP packets of the Path message. Thus the source and destination addresses of the IP packets of the Reservation messages are actually the next and previous hops. The value of the source and destination addresses is thus determined dynamically as the Reservation messages transit through the path. Thus the structure of the IP packets 77 of the Reservation message shown in Figure 4(b) is actually representative of the transport layer of the Reservation messages. Thus the structure shown in Figure 4(b) illustrates the general concept of a Reservation message, that is the originating source address and the ultimate destination address. This analysis of the Reservation message is somewhat artificial, but serves to best illustrate the principle of RSVP for the purposes of this description. It should be noted that the example described herein utilises standard RSVP. No change to the standard RSVP is envisaged or proposed.

The flow identification information in the IP packets of the Reservation message is retrieved from the memory of each routing switch as the IP packets arrive at the routing switches. The routing switches retrieve from their memories the Path information for the particular message flow, and send the IP packets to the previous hop indicated by the stored hop information. Thus the Reservation message follows the identical route to the Path message (in reverse) via lines 68, 66 and 64.

This routing of the Path and Reservation messages using the flow identification information in the IP packets is in line with conventional RSVP.

The second network proxy server receives the Reservation message and sends a quality of service confirmation message on line 62 by way of acknowledgement to the second network host terminal 14a, indicating that the quality of service session has been set up. This is indicated by step 60 in Figure 2.

Once the quality of service session is set-up, IP data packets (in data messages) do not go through either the second network proxy server or the first network proxy server. The IP packets go directly from the second network host terminal 44a to the host terminal 40a (and vice versa) through the routing network comprising the routing switches 12 following the network path determined by the flow identification information and configured during the quality of service session set-up.

The proxy servers can provide quality of service sessions, such as RSVP Path and Reservation messages, for those terminals which have no ability of their own to facilitate such sessions. These terminals may be terminals which have no quality of service session capability at all. Alternatively these terminals may have limited quality of service session capability, and the provision of a proxy server enables the quality of service session which can be supported by such terminals to become independent of the terminals capability. Even for those terminals which have extensive quality of service session capability, the provision of the proxy server enables the terminal to be relieved of processing tasks.

Each host terminal which requires quality of service provision in a network needs to be aware of the existence of a proxy server in the network. That is, there must be a process by which the host terminals can discover proxy servers. There are effectively two ways this can happen. In a first way, host terminals in the network broadcast a server-soliciting message (SSM). A proxy server in the network responds by sending back to the host terminal a server response message (SRM). In a second way, the proxy server in a network broadcasts a client request message (CRQM) to the local network. Responsive thereto, host terminals (which can be considered to be proxy server clients) send back a client registration message (CRGM). In this way the presence of the proxy servers in the networks is registered by host terminals in the networks in a similar way as the presence of agents (home agents, foreign agents) is currently registered in standard mobile IP. The implementation of the technique for nodes to register with proxy servers will be within the scope of one skilled in the art.

A proxy server may be provided in only one network, the functionality for setting up a quality of service session being provided by the host terminals themselves in one or more networks. Thus although the example of Figure 1 shows both the first network and the second network including proxy servers and an RSVP session being established using the two respective proxy servers, in practice only one of the two proxy servers (either the first network proxy server or the second network proxy server) may be provided, and the quality of service session established between the one of the proxy terminals and a terminal. It is not essential that the one of the terminals requesting the quality of service session is provided with a proxy server, or that the one of the terminals responsive to the quality of service session is provided with a proxy server.

The proxy server may be associated with only some of the host terminals in a particular network. Several proxy servers may be provided in one network to support different host terminals.

The proxy server complies with the IETF RFC 2205, and other RSVP IntServ related RFCs, and inter-operates with all current publicly available RSVP implementations. The application and platform independence provided by the proxy server supports all applications including live video/audio on all available operating platforms, including Sun Solaris, Linux and Windows 95/NT.

The application and platform independence provided by the RSVP proxy servers is due to the removal of the RSVP functionality of the nodes/terminals themselves. It will be appreciated that even terminals having RSVP capability may operate with an RSVP proxy server to enable application/platform in dependency and to relieve processing burden. The proxy server alleviates the problem of computational overhead due to the RSVP messages processing for those terminals that have limited processing power and/or a short battery life. The proxy server can operate as a front-end agent to provide computation-intensive processing tasks for initiating RSVP signaling and interacting with the RSVP capable network nodes and elements for quality of service provisioning.

The invention has been described herein with reference to a particular example of an RSVP quality of service session which utilises Path and Reservation messages. However, the invention is more generally applicable to any quality of service session which utilises request and reply messages between two terminals for configuring a quality of service session.

## Claims

1. A method of configuring a quality of service session, between terminals (44a, 40a) in different networks (2, 4) capable of supporting IP communication, **characterised by** the method comprising: providing means (42, 46), in at least one of the networks linked to at least one terminal (44a) in that network, the means being operative to configure a quality of service session between that one terminal (44a) and a terminal (40a) in another network, and including the steps of: said at least one terminal sending a request to establish said session to the means; on receiving the request, the means determining quality of service associated with the session; and the means transmitting the quality of service information to the other network to request establishment of the session.

2. The method of claim 1 wherein the quality of service session (60) is configured responsive to a quality of service request (50) from the at least one terminal (44a).

3. The method of claim 2 wherein the quality of service request is indicative of the quality of service to be supported.

4. The method of claim 2 or claim 3 wherein the quality of service request specifies exactly the quality of service to be supported.

5. The method of claim 2 or claim 3 wherein the quality of service request indicates the nature of the data to be transmitted once the quality of service session is established.

6. The method of any one of claims 2 to 5 wherein the quality of service session is an RSVP session and a Path message is generated by the means responsive to the quality of service request.

7. The method of any one of claims 2 to 6 wherein the at least one terminal receives a confirmation signal from the means indicating that the quality of service session has been configured.

8. The method of claim 7 wherein the quality of service session is an RSVP session and the means generates the confirmation signal responsive to a Reservation message.

9. The method of claim 1 wherein a quality of service indication signal is generated to the at least one terminal responsive to initiation of a quality of service session.

10. The method of claim 9 wherein the means completes configuration of the quality of service session responsive to a quality of service response signal from the at least one terminal.

11. The method of claim 9 wherein the quality of service session is an RSVP session and the initiation of the quality of service session is indicated by a Path message, and the configuration of the quality of service session is completed by receipt of a Reservation message.

12. The method of any one of claims 1, 2, 3, 9, 10, and 11, wherein the means (42, 46) is a proxy server.

13. The method of any one of claims 1, 2, 3, 9, 10, and 11, wherein at least one terminal (44a, 40a) is incapable of configuring a quality of service session.

14. A network (4) having at least one terminal (44a) capable of supporting IP communication **characterised in that** the network comprises a means (46) linked to the at least one terminal (44a), for configuring a quality of service session between the at least one terminal (44a) and a terminal (40a) in another network, and wherein, when said at least one terminal sends a request to establish said session to the means, on receiving the request, the means is operative to determine quality of service associated with the session and transmit the quality of service information to the other network to request establishment of the session.

15. The network of claim 14, wherein the means (46) is a proxy server.

16. The network of claim 14 or claim 15, wherein at least one terminal (44a, 40a) is incapable of configuring a quality of service session.

## Patentansprüche

1. Ein Verfahren zur Konfigurierung einer Dienstgütesitzung zwischen Endgeräten (44a, 40a) in verschiedenen Netzwerken (2, 4), welche fähig sind, die IP-Kommunikation zu unterstützen, **dadurch gekennzeichnet, dass** das Verfahren umfasst: Ein Bereitstellungsmittel (42, 46) in mindestens einem der Netzwerke, welches mit mindestens einem Endgerät (44a) in diesem Netzwerk verknüpft ist, wobei das Mittel fähig ist, eine Dienstgütesitzung zwischen diesem einen Endgerät (44a) und einem Endgerät (40a) in einem anderen Netzwerk zu konfigurieren, und die folgenden Schritte umfassend: Senden, durch das besagte mindestens eine Endgerät, einer Anfrage für den Aufbau der besagten Sitzung an das Mittel; nach Empfang der Anfrage, Ermitteln, durch das Mittel, der der Sitzung zugeordneten Dienstgüte; und Übertragen, durch das Mittel, der Dienstgüte-Information an das andere Netzwerk, um den Aufbau der Sitzung anzufordern.

2. Das Verfahren nach Anspruch 1, wobei die Dienstgütesitzung (60) entsprechend einer von dem mindestens einen Endgerät (44a) übermittelten Dienstgüteanforderung (50) konfiguriert ist.

3. Das Verfahren nach Anspruch 2, wobei die Dienstgüteanforderung die zu unterstützende Dienstgüte angibt.

4. Das Verfahren nach Anspruch 2 oder Anspruch 3, wobei die Dienstgüteanforderung die zu unterstützende Dienstgüte genau spezifiziert.

5. Das Verfahren nach Anspruch 2 oder Anspruch 3, wobei die Dienstgüteanforderung die Natur der zu übertragenden Daten angibt, wenn die Dienstgütesitzung aufgebaut ist.

6. Das Verfahren nach einem beliebigen der Ansprüche 2 bis 5, wobei die Dienstgütesitzung eine RSVP-Sitzung ist und in Antwort auf die Dienstgüteanforderung eine Pfad-Nachricht von dem Mittel erzeugt wird.

7. Das Verfahren nach einem beliebigen der Ansprüche 2 bis 6, wobei das mindestens eine Endgerät ein Bestätigungssignal von dem Mittel erhält, welches darauf hinweist, dass die Dienstgütesitzung konfiguriert worden ist.

8. Das Verfahren nach Anspruch 7, wobei die Dienstgütesitzung einen RSVP-Sitzung ist, und das Mittel das Bestätigungssignal in Antwort auf eine Reservierungsnachricht das Bestätigungssignal erzeugt.

9. Das Verfahren nach Anspruch 1, wobei das die Dienstgüte angebende Signal für mindestens ein Endgerät in Antwort auf die Initiierung einer Dienstgütesitzung erzeugt wird.

10. Das Verfahren nach Anspruch 9, wobei das Mittel die Konfiguration der Dienstgütesitzung in Antwort auf ein Dienstgüte-Antwortsignal von dem mindestens einen Endgerät vollendet.

11. Das Verfahren nach Anspruch 9, wobei die Dienstgütesitzung eine RSVP-Sitzung ist und die Initiierung der Dienstgütesitzung von einer Pfad-Nachricht angegeben wird, und wobei die Konfiguration der Dienstgütesitzung durch den Empfang einer Reservierungsnachricht vollendet wird.

12. Das Verfahren nach einem beliebigen der Ansprüche 1, 2, 3, 9, 10 und 11, wobei das Mittel (42, 46) ein Proxy-Server ist.

13. Das Verfahren nach einem beliebigen der Ansprüche 1, 2, 3, 9, 10 und 11, wobei das mindestens eine Endgerät (44a, 40a) unfähig ist, eine Dienstgütesitzung zu konfigurieren.

14. Das Netzwerk (4) mit mindestens einem Endgerät (44a), welches fähig ist, eine IP-Kommunikation zu unterstützen, **dadurch gekennzeichnet, dass** das Netzwerk ein mit mindestens einem Endgerät (44a) verknüpftes Mittel (46) umfasst, um eine Dienstgütesitzung zwischen dem mindestens einen Endgerät (44a) und einem Endgerät (40a) in einem anderen Netzwerk zu konfigurieren, und wobei, wenn das besagte mindestens eine Endgerät eine Anforderung für den Aufbau der besagten Sitzung an das Mittel sendet, das Mittel bei Empfang der Anforderung fähig ist, die der Sitzung zugeordnete Dienstgüte zu ermitteln und die Dienstgüteinformation an das andere Netzwerk zu übermitteln, um den Aufbau der Sitzung anzufordern.

15. Das Netzwerk nach Anspruch 14, wobei das Mittel (46) ein Proxy-Server ist.

16. Das Netzwerk nach Anspruch 14 oder Anspruch 15, wobei mindestens ein Endgerät (44a, 40a) unfähig ist, eine Dienstgütesitzung zu konfigurieren.

## Revendications

1. Procédé permettant de configurer une session de qualité de service entre les terminaux (44a, 40a) dans différents réseaux (2, 4) pouvant supporter la communication IP, **caractérisé en ce que** le procédé comprend : la fourniture de moyens (42, 46), dans au moins l'un des réseaux reliés à au moins un terminal (44a) se trouvant dans ce réseau, les moyens étant opérationnels pour configurer une session de qualité de service entre ce terminal (44a) et un terminal (40a) se trouvant dans un autre réseau, et incluant les étapes suivantes : l'envoi d'une requête d'établissement de ladite session aux moyens par ledit au moins un terminal ; la détermination de la qualité de service associée à la session par les moyens, lors de la réception de la requête ; et la transmission d'informations de qualité de service à l'autre réseau par les moyens pour demander l'établissement de la session.

2. Procédé selon la revendication 1 dans lequel la session de qualité de service (60) est configurée en réponse à une qualité de requête de service (50) provenant d'au moins un terminal (44a).

3. Procédé selon la revendication 2 dans lequel la qualité de la requête de service est indicative de la qualité du service à supporter.

4. Procédé selon la revendication 2 ou la revendication 3 dans lequel la qualité de la requête de service spécifie exactement la qualité du service à supporter.

5. Procédé selon la revendication 2 ou la revendication 3 dans lequel la qualité de la requête de service indique la nature des données à transmettre une fois que la session de qualité de service est établie.

6. Procédé selon l'une quelconque des revendications 2 à 5 dans lequel la session de qualité de service est une session RSVP et un message « Chemin » est généré par les moyens en réponse à la qualité de la requête de service.

7. Procédé selon l'une quelconque des revendications 2 à 6 dans lequel au moins un terminal reçoit un signal de confirmation provenant des moyens indiquant que la session de qualité de service a été configurée.

8. Procédé selon la revendication 7 dans lequel la session de qualité de service est une session RSVP et les moyens génèrent le signal de confirmation en réponse à un message «Réservation».

9. Procédé selon la revendication 1 dans lequel un signal d'indication de qualité de service est généré vers au moins un terminal en réponse au lancement d'une session de qualité de service.

10. Procédé selon la revendication 9 dans lequel les moyens achèvent la configuration de la session de qualité de service en réponse à un signal de réponse de qualité de service provenant d'au moins un terminal.

11. Procédé selon la revendication 9 dans lequel la session de qualité de service est une session RSVP et le lancement de la session de qualité de service est indiqué par un message « Chemin », et la configuration de la session de qualité de service est achevée par la réception d'un message «Réservation».

12. Procédé selon l'une quelconque des revendications 1, 2, 3, 9, 10, et 11, dans lequel les moyens (42, 46) sont un serveur mandataire.

13. Procédé selon l'une quelconque des revendications 1, 2, 3, 9, 10, et 11, dans lequel au moins un terminal (44a, 40a) est incapable de configurer une session de qualité de service.

14. Réseau (4) ayant au moins un terminal (44a) capable de supporter la communication IP **caractérisé en ce que** le réseau comprend des moyens (46) reliés à au moins un terminal (44a), pour configurer une session de qualité de service entre au moins un terminal (44a) et un terminal (40a) se trouvant dans un autre réseau, et dans lequel, lorsque ledit au moins un terminal envoie une requête d'établissement de ladite session aux moyens, lors de la réception de la requête, les moyens sont opérationnels pour déterminer la qualité de service associée à la session et transmettre les informations de qualité de service à l'autre réseau pour demander l'établissement de la session.

15. Réseau selon la revendication 14, dans lequel les moyens (46) sont un serveur mandataire.

16. Réseau selon la revendication 14 ou la revendication 15, dans lequel au moins un terminal (44a, 40a) est incapable de configurer une session de qualité de service.
